# EUROPEAN PATENT SPECIFICATION

(11) **EP 1 318 456 B1**
(45) Date of publication and mention of the grant of the patent: **08.03.2006**
(21) Application number: 02010420.4
(22) Date of filing: 08.05.2002
(51) Int. Cl.: G06F 11/36, G06F 1/00

(54) **Electronic apparatus and debug authorization method**
Elektronisches Gerät und Verfahren für Fehlerbeseitigungsberechtigung
Appareil électronique et méthode d'autorisation de débogage

(30) Priority: 07.12.2001 JP 2001374649
(43) Date of publication of application: 11.06.2003
(73) Proprietor: FUJITSU LIMITED, Kawasaki-shi, Kanagawa 211-8588 (JP)
(72) Inventor: Asami, Tomomi, c/o Fujitsu Limited, Kawasaki-shi, Kanagawa 211-8588 (JP); Hashimoto, Shigeru, c/o Fujitsu Limited, Kawasaki-shi, Kanagawa 211-8588 (JP); Yamamoto, Koken, c/o Fujitsu Limited, Kawasaki-shi, Kanagawa 211-8588 (JP); Sugimura, Yoshiyasu, c/o Fujitsu Limited, Kawasaki-shi, Kanagawa 211-8588 (JP); Kawasaki, Yusuke, c/o Fujitsu Limited, Kawasaki-shi, Kanagawa 211-8588 (JP)
(74) Representative: Kreutzer, Ulrich

(56) References cited:
- WO-A-01/23980
- US-A- 5 872 917
- US-A- 5 978 937

## Description

### BACKGROUND OF THE INVENTION

### 1. Field of the Invention

This invention relates to an electronic apparatus having security functions for preventing wrongful acquisition of the behavior of internal circuitry in an electronic apparatus, and to an electronic apparatus debug authorization method.

There is a demand for highly secure equipment in all kinds of fields such as electronic commercial transactions. For that reason, methods have been devised for preventing the reverse analysis (reverse engineering) of apparatuses by all kinds of methods. Despite these efforts, there has been no end to cases of counterfeit ROMs and the like being produced and equipment being wrongfully used in applications not intended by the developers. For that reason, systems are demanded wherein the operations of the apparatuses themselves are impervious to reverse analysis by a third party.

### 2. Description of the Related Art

The CPU loaded into an IC (especially LSI) configuring part of the internal circuitry of an electronic apparatus has debugging functions (sometimes called a debug control unit or DCU below). When an apparatus that uses an LSI is being developed, the debugging functions acquire the behavior (content of program counter and registers and the like) of the internal circuitry (circuits other than memory and the like) comprising the LSI, monitor how the processing thereof is being done, inspect programs, and perform debugging. After product shipment, moreover, when a malfunction occurs or the apparatus is subjected to diagnostic testing, the debugging functions are similarly used. Conventionally, no security functions were provided against such debugging functions.

US 5,978,937 discloses a microprocessor having a processor core and a debug module. The processor core executes a user program and the monitor program for debugging a user target system. The debug module serves as an interface with the debug tool to let the processor core execute the monitor program stored in the debug tool. The debug module makes an interrupt or exception request to switch the processor core from the user program to the monitor program.

WO 01/23980 A1 discloses a client/server system having a client platform, which can be trusted to output data faithfully, in such a way that the data itself cannot be copied or modified.

US 5,872,917 discloses a method for authenticating one or both of two parties, for example, a user and a host computer. The first party and the second party each know the same password. The first party sends a challenge to the second party. The second party generates and sends to the first party a response, which is among others based on a first function of the password. A method of bi-directional authentication may be achieved by having the first party return to the second party a response using a different function of the password.

A problem is that a third party can easily perform accurate reverse analysis on the behavior of internal circuits (particularly LSIs) using the debugging functions, so that such apparatuses are defenseless in the security sense. For an electronic apparatus such as a POS register using a CPU having debugging functions, for example, by connecting the POS register (electronic apparatus) to a personal computer or the like (debugger), even data such as passwords or encryption keys or the like can easily be searched for and found.

### SUMMARY OF THE INVENTION

Accordingly, an object of the present invention is to provide an electronic apparatus, and an electronic apparatus debug authorization method, for preventing wrongful reverse analysis by a third party by providing security functions against the debugging functions.

An electronic apparatus is provided that can prevent wrongful reverse analysis by a third party. Authorization

An electronic apparatus is provided that can prevent wrongful reverse analysis by a third party. Authorization functions are provided in the electronic apparatus for judging whether or not to enable utilization of debugging functions. The authorization functions send command data to an external device connected to the electronic apparatus, based on a debug request containing the designation of a prescribed address range in the internal circuitry of the electronic apparatus, a first authorization is performed, based on the command data and on reply data to the command data received from the external device, a second authorization is performed, based on a user code received from the external device following the reply data, and use of the debugging functions is enabled, based on the first authorization and the second authorization.

### BRIEF DESCRIPTION OF THE DRAWINGS

Fig. 1 is a diagram of an example system configuration in an embodiment aspect of the present invention for debugging an electronic apparatus;
Fig. 2 is a flowchart of debug authorization function processing in an embodiment aspect of the present invention;
Fig. 3 is a flowchart of debug authorization function processing in an embodiment aspect of the present invention;
Fig. 4 is a diagram of an example system configuration in an embodiment aspect of the present invention that also comprises a signature making device;
Fig. 5 is a diagram for describing LSI 2 application examples;
Fig. 6 is a configuration diagram of LSI 2 peripheral circuitry; and
Fig. 7 is a diagram for describing an electronic apparatus.

### DESCRIPTION OF THE PREFERRED EMBODIMENTS

Embodiment aspects of the present invention are described below in conjunction with the drawings.

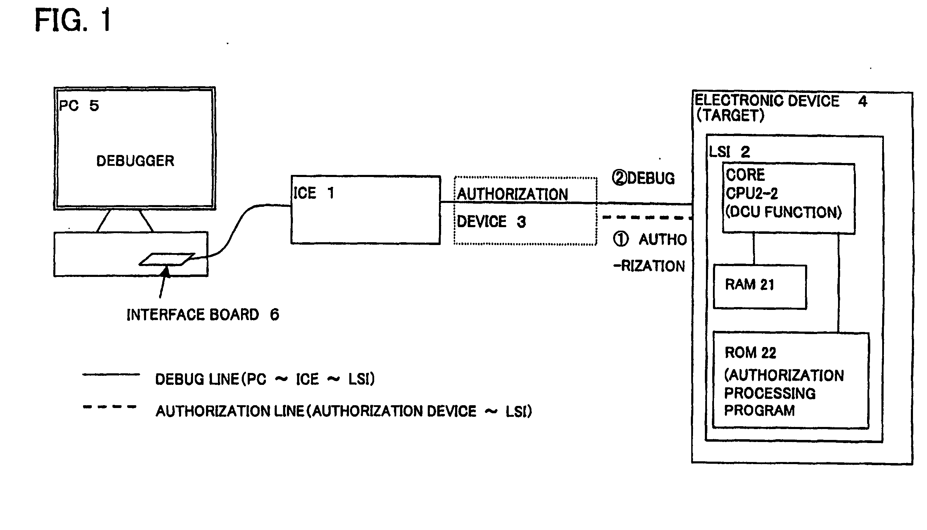

Fig. 1 is a diagram of an example system configuration in an embodiment aspect of the present invention for debugging an electronic apparatus. When debugging an electronic apparatus (target) wherein an IC (LSI, for example) 2 is mounted, an electronic apparatus 4 and an ICE (in circuit emulator) 1 are connected through an authorization device (external device) 3 that is characteristic of the present invention. The electronic apparatus 4 comprises internal circuits such as the LSI 2 which has a core CPU 2-2 which has debugging functions (DCU (debug control unit)), a RAM 21, ROM 22 and other peripheral circuitry. In the ROM 22 is loaded firmware (an authorization processing program) for effecting the security functions (debug authorization functions) that are characteristic of the present invention. The peripheral circuits differ according to the electronic apparatus 4 application, but an example is an electronic money settlement circuit. The electronic apparatus also comprises input means and display means (not shown) for designating address ranges in the internal circuitry that are to be debugged.

The authorization device 3 is inserted between the ICE 1 and the electronic apparatus 4, and performs authorization processing based on communications with the firmware in the LSI 2, as is described subsequently.

The ICE 1 also connects via an interface 6 to a general purpose personal computer (PC) 5 that is the debugger. The debugger, as will be described subsequently, can only use the debugging functions of the LSI 2 in the electronic apparatus when authorization processing has been performed correctly between the electronic apparatus 4 and the authorization device 3. That is, in order to enable the debugging functions of the LSI 2, it is necessary to have authorization processing performed between the authorization device 3 and the firmware in the electronic apparatus 4. When the authorization processing is not performed properly, the debugging functions of the LSI 2 will not operate, wherefore it is possible to prevent such wrongful acts as the reverse engineering of the internal behavior of an LSI by a third party after shipment of an electronic apparatus to the field, for example, so that higher security can be maintained.

Debug authorization function processing in an embodiment aspect of the present invention is now described.

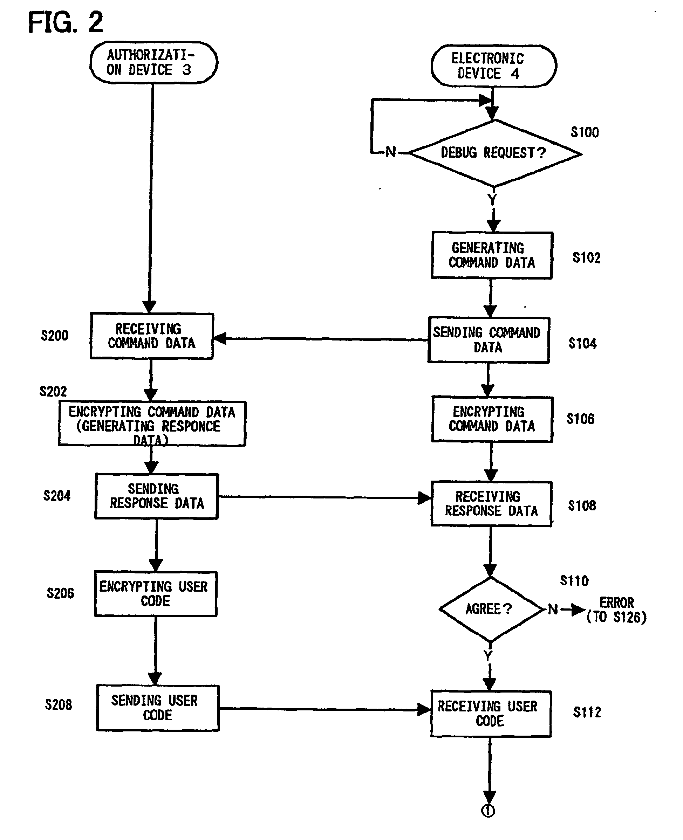

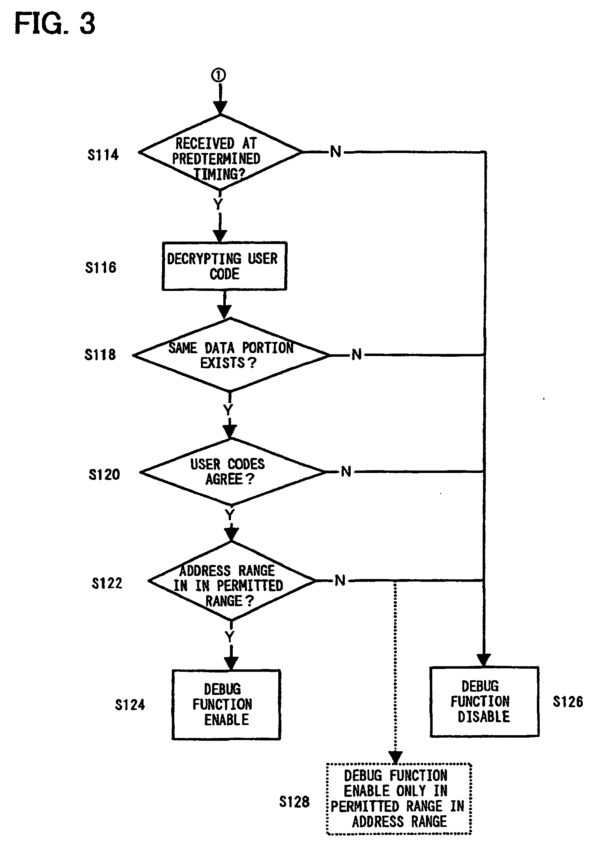

In Fig. 2 and 3 are given flowcharts for debug authorization function processing in an embodiment aspect of the present invention. In the processing diagrammed in Fig. 2, firstly, after turning on the power to the electronic apparatus 4 and authorization device 3 and starting them up, a debug request is caused to be issued in the LSI 2 with an input operation or the like from the outside (S100). At this time, the address range to be debugged is also designated along with the debug request. When no address range is designated, it is assumed that all addresses are designated.

When a debug request is issued, following thereupon, command data are generated (S102), and the command data are sent to the authorization device 3 (S104). The command data are generated on the bases of random numbers, for example, and become different data for every debug request. The command data are encrypted using a prescribed encryption key in the LSI 2, thereby becoming encrypted data (S106).

Meanwhile, the authorization device 3, upon receiving the command data from the LSI 2 (S200), effects encryption using a prescribed encryption key (S202), and returns those encrypted data as reply data to the LSI 2 (S204).

The LSI 2, upon receiving the reply data from the authorization device 3 (S108), in a first authorization determination, compares the received reply data against the encrypted data (encrypted command data) generated in step S102 as noted above (S110). When those agree, the first authorization determination clears normally and transitions next to second authorization determination processing. If those do not agree, an error occurs (S126 in Fig. 3), and use of the debugging functions (DCU) is not allowed.

An official authorization device 3 will have the same encryption key as the encryption key of the electronic apparatus 4, and, when the authorization device 3 is an official device, the command data encrypted by the electronic apparatus 4 and the command data (reply data) encrypted by the authorization device 3 will agree.

The authorization device 3, after receiving the reply data in the LSI 2, also encrypts a user code stored in the authorization device 3 (S206), and, after prescribed timing, sends that encrypted user code to the LSI 2 (S208). The user code, which is registered in the authorization device 3 beforehand, contains identification information peculiar to a certain user, and a permission level corresponding to the address range which can be debugged in that user's LSI 2.

When an encrypted user code is received from the authorization device 3 (S112), the processing diagrammed in Fig. 3 is transitioned to, and, next, as the second authorization determination, a determination is made as to whether the timing of that reception is the prescribed timing (S114). The prescribed timing will be, for example, determined by a prescribed time (such as 5 clock signals, for example) elapsing after the timing of the reception of the reply data in step S108.

When reception has been made at the prescribed timing, the second authorization determination clears normally, and third authorization determination processing is next transitioned to. When that is not the case, an error occurs (S126), and use of the debugging functions (DCU) is not allowed. The official authorization device 3, after sending the reply data, sends the encrypted user data with prescribed timing.

After the second authorization determination processing, the encrypted user code received in step S112 is decrypted (S116), and, based on the user code obtained, the following third authorization determination processing, and, after that, fourth authorization determination processing and fifth authorization determination processing, are executed.

For the third authorization determination processing, a prescribed data portion of the command data (encrypted data) encrypted in step S106 and a prescribed data portion of the user code decrypted in step S116 are compared (S118). The user code has a data portion which is the same as the prescribed data portion of the data encrypted by the encryption key used as described earlier. To state that the other way around, the encryption key encrypts command data so as to have a data portion that is the same as one portion of the user code. When those agree, the third authorization determination clears normally, and the fourth authorization determination processing is transitioned to. When that is not the case, an error occurs (S126), and use of the debugging functions is not allowed.

By the first, second, and third authorization determination processing, it is determined whether or not the authorization device is an official device. That is, an official authorization device 3 will correctly encrypt command data from the LSI 2 (first authorization determination processing), send the encrypted user data with correct timing to the LSI2 (second authorization determination processing), and then correctly encrypt the user data (third authorization determination processing). By determining whether or not the authorization device 3 is an official device by a plurality of authorization processes, in this manner, high security can be effected.

Following thereupon, as the fourth authorization determination processing, the user code decrypted in step S116 and the user code stored in a prescribed program in the electronic apparatus 4 are compared (S120). In the electronic apparatus 4, a user code is registered in a one-to-one correspondence with the user code in the authorization device 3. When those agree, the fourth authorization determination clears normally, and the fifth authorization determination processing is next transitioned to. When such is not the case, an error occurs (S126), and use of the debugging functions is not allowed.

By that fourth authorization determination processing, a determination can be made as to whether the user is an official user or not.

For the fifth authorization determination processing, furthermore, a determination is made as to whether or not the debugging range (address range) designated at the time of the debug request conforms to the permission level contained in the user code decrypted in step S116 (S122). When it does conform, the fifth authorization determination processing clears normally, and, therewith, it becomes possible to use the debugging functions of the CPU loaded in the LSI 2 for the designated address range (S124). When it does not conform (meaning both when the entire designated address range does not conform and when part of the designated address range does not conform), an error occurs, and use of the debugging functions is not allowed. Alternatively, provision may be made so that when part of the designated address range does not conform, use of the debugging functions is disallowed only in that range that does not conform (S128).

The firmware has a use allowance table wherein accessible ranges (debugging ranges) in an electronic apparatus are determined which correspond to a plurality of permission levels. The firmware references that use allowance table and determines whether or not a designated debugging range is contained within a debugging range corresponding to the permission level contained in the decrypted user code.

Thus, in this embodiment aspect, plural authorization processes ((plural) authorization device authorizations, user authorization, and debugging range authorization) are performed successively, and, unless all of those clear, the debugging functions cannot be used, wherefore high security can be guaranteed. Even with one of the plurality of authorization processes noted above, of course, comparatively high security can be guaranteed.

With a conventional security procedure using verification by a simple password or the like, moreover, if the password leaks out, the security procedure ceases to function properly, and the password is subject to being found out by repeated retrials. That being so, such a procedure is not well suited to a security mechanism for an electronic apparatus provided to multiple users. With this embodiment aspect, security is effected by the combination of the authorization device 3 and electronic apparatus 4 with firmware, so that authorization processing is performed by a physical connection and authorization algorithm, wherefore high security is made possible. Wrongful analysis by a personal computer (PC) 5 is also very difficult.

A user code that is signed in a prescribed program stored in memory in an electronic apparatus (target) may also be made variable. When the address range that can be debugged is to be altered, for example, the user code is changed in order to change the permission level contained in the user code. The permission level differs from user to user. For the user codes of ordinary users, for example, a comparatively low-level permission level having an address range (the LSI 2 itself, for example) that cannot be debugged is set, whereas, for the user codes of LSI developing manufacturer holders, a high-level permission level wherewith all address ranges (all address ranges in the target, inclusive of the LSI 2) can be debugged is set. That is because an LSI developing manufacturer holder needs to examine all of the address ranges when a problem arises or a device is subjected to diagnostic testing or the like.

However, when diagnostic testing or the like is being performed, and the maintenance person connects his or her authorization device, that is, an authorization device wherein the user code of the maintenance person is registered, to the electronic apparatus (target) on which diagnostics are being run, the user code of the authorization device (i.e. the user code of the maintenance person in this case) and the user code of the target (i.e. the user code of an ordinary user in this case) will not agree (and the permission level will also be different), wherefore, according to the processing diagrammed in Fig. 2, debugging cannot be done.

Thereupon, when the authorization device of the maintenance person is connected, and the target of an ordinary user is to be debugged, the user code of the target is changed beforehand to the user code of the maintenance person, and then the authorization device of the maintenance person is connected, whereupon debugging corresponding to the level information in the user code of the maintenance person becomes possible. The changing of the user code is performed by a signature making device connected to the PC 5, for example.

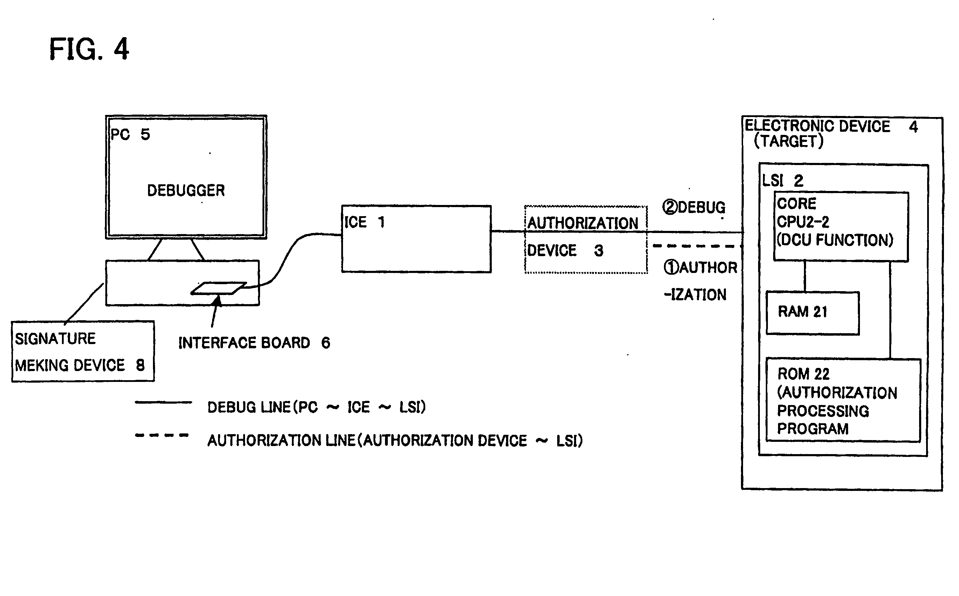

Fig. 4 is a diagram of an example system configuration in an embodiment aspect of the present invention that also comprises a signature making device. In Fig. 4, before a debug request is issued, a signature making device 8 extracts a signature containing a user code from a program stored in the electronic apparatus 4, through the PC 5, also produces a signature containing another user code (the user code of the maintenance person, for example), and, through the PC 5, rewrites the signature of that program in the electronic apparatus to that newly produced signature. Thus provision is made so that the signature is rewritten, the user code in the target is changed, and the permission level is also changed, so that, thereby, even ranges that cannot be debugged (or accessed) with the user code of an ordinary user can be debugged.

After debugging by the maintenance person has been completed, the signature in the electronic apparatus is restored to the signature of the ordinary user, using the signature making device 8.

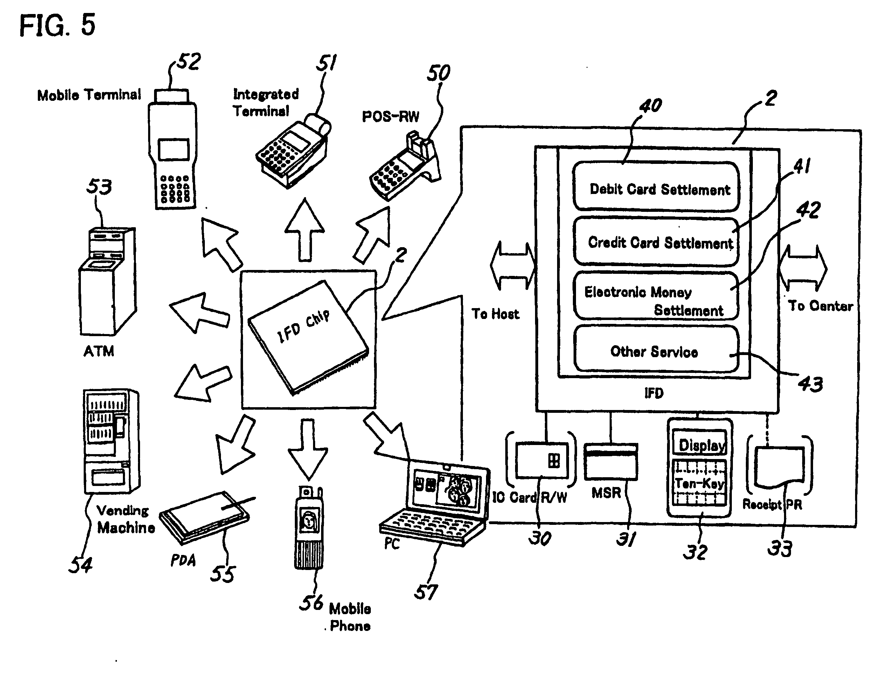

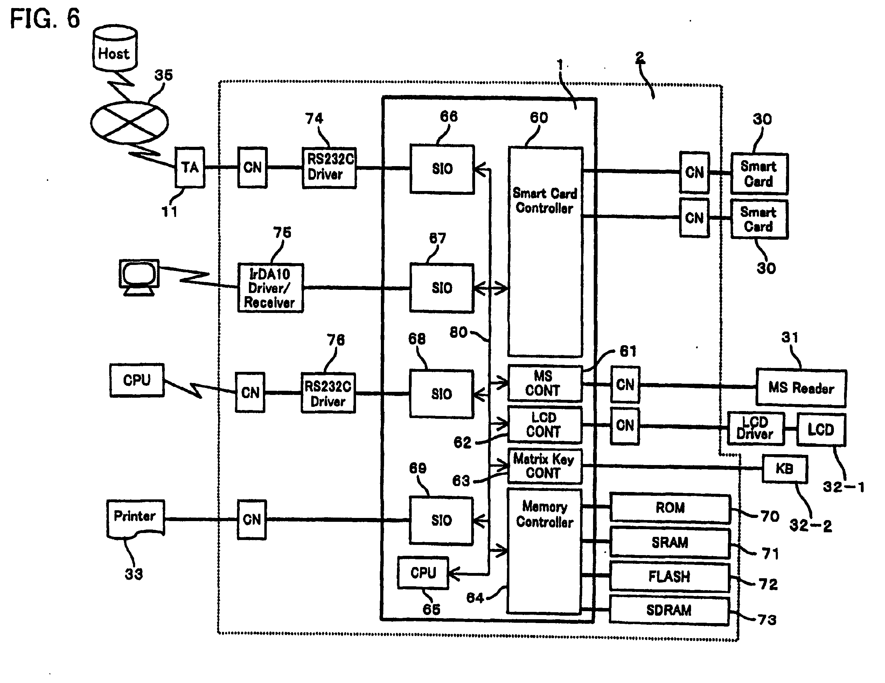

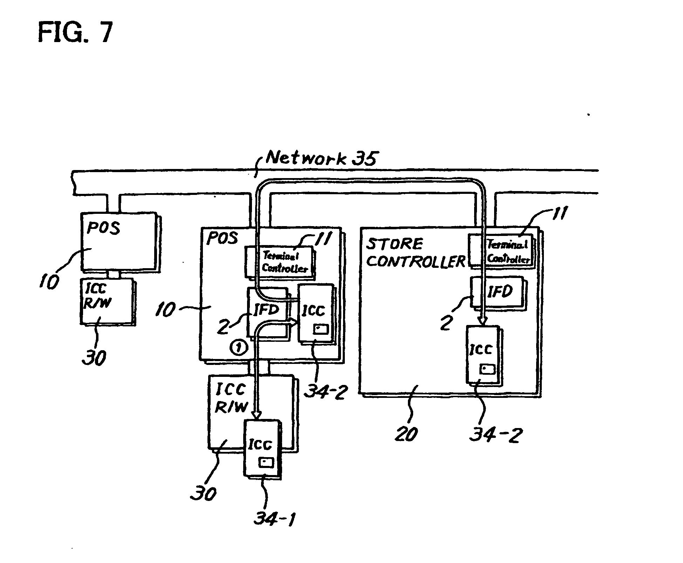

Next, an electronic apparatus (target) wherein is mounted the LSI 2 described earlier is described. Fig. 5 is an explanatory diagram for an application example of the LSI 2, Fig. 6 is a configuration diagram of peripheral circuitry for the LSI 2 in that application example, and Fig. 7 is an explanatory diagram of an electronic apparatus.

In the example diagrammed in Fig. 5, the LSI 2 is an LSI for card settlement having a debit card settlement function 40, credit card settlement function 41, electronic money settlement function 42, and other service function 43. Therefore, to the LSI 2 are connected an IC card reader/writer 30, magnetic card reader 31, an display and keypad 32. As necessary, moreover, a receipt printer 33 may also be connected. These settlement functions 40 to 43 are implemented by running a program in the CPU 2-2 of the LSI 2.

Accordingly, by mounting this LSI 2, card settlement functions can be imparted to the various electronic apparatuses 50 to 57. These electronic apparatuses are such, for example, as a POS reader/writer 50, general terminal 51, mobile terminal 52, ATM (automatic teller machine) 53, vending machine 54, PDA (personal data assistant) 55, portable telephone 56, or PC (personal computer) 57.

The peripheral circuitry for the LSI 2 for such card settlement is described with reference to Fig. 6. The peripheral circuitry has a smart card controller 60, an MS control circuit 61, an LCD control circuit 62, a matrix KB control circuit 63, a memory controller 64, and serial I/O boards 69 to 72. In Fig. 6, moreover, the LSI 2 described earlier is shown mounted on a target board 7.

The smart card controller 60 reads and writes data of the IC card (called a smart card) through the IC card reader/writer 30. The MS control circuit 61 controls the MS (magnetic stripe) reader 31. The LCD control circuit 62 controls the display of an LCD (liquid crystal display) 32-1. The matrix KB control circuit 63 recognizes inputs from the keypad 32-2. The memory controller 64 controls inputs and outputs to and from various memories (ROM 65, SRAM 66, FLASH memory 67, SDRAM 68) on the board 7. The serial I/O boards 69 to 72 are connected to drivers 73 to 75 on the board 7 for inputting and outputting serial data. These are all connected to a CPU bus.

Fig. 7 is a system configuration diagram for an electronic apparatus wherein a settlement LSI is mounted, representing a POS system. To a network 35 are connected a store controller 20 and a plurality of POS terminals 10. To each of the POS terminals 10 is connected an IC card reader/writer 30. To the store controller 20 and to the plurality of POS terminals 10 is connected the settlement LSI 2 (called an IFD) described earlier, and settlement data are sent and received directly. That is, the store controller 20 and POS terminals 10 comprise the electronic apparatus 4 in this embodiment aspect.

The IC card 34-1 of a customer communicates via the IFD 2 with a POS IC card 34-2, and the POS IC card 34-2 communicates with the IC card 34-2 of the store controller 20 via the IFD 2, terminal controller 11, network 35, terminal controller 11, and IFD 2.

When an electronic settlement is being done with an IC card, for example, data on the IC card 34-1 of the customer is sent via the IFD 2 and stored in the POS IC card 34-2. After that, data stored on the POS IC card 34-2 is sent via the IFD 2, terminal controller 11, network 35, terminal controller 11, and IFD 2, and stored in the IC card 34-2 in the store controller 20.

In this system, because the route of the electronic settlement data is closed by the IFDs 2, there is no danger of settlement data (i.e. passwords, account numbers, balances, and the like) leaking out, so security is high.

However, as described earlier, if the IFD 2 is accessed using debugging functions, settlement data (i.e. passwords, account numbers, balances, and the like) can be wrongfully acquired, and there is a danger of wrongful use. That being so, the debugging authorization functions of the present invention are particularly effective in applications like this.

In the embodiment aspect described in the foregoing, moreover, the LSI 2 is described for use in card settlements, but the invention can be used in other applications as well.

Based on the present invention, as described in the foregoing, security functions (debugging authorization functions) are provided for debugging functions for an electronic apparatus, wherefore wrongful acts such as the reverse engineering of the behavior of the internal circuitry of electronic apparatuses by a third party can be prevented, and higher security can be maintained than with conventional devices.

Because security is effected with the combination of an authorization device (external device) and firmware in an electronic apparatus, security is effected by a physical connection and an authorization algorithm, wherefore high security is made possible. Also, because a plurality of authorization processes is required, higher security can be guaranteed.

The scope of the protection of this invention is not limited to the embodiment aspect described above, but extends to inventions described in the claims.

## Claims

1. An electronic apparatus (4) comprising:
- Internal circuitry comprising at least an LSI (2);
- a debugging unit (2-2) for debugging said internal circuitry; and
- an authorization unit (2) for enabling use of said debugging unit (2-2) based on communications with an external device (3), **characterised in that**
said authorization unit (2) sends command data to said external device (3) based on a debug request containing designation of a prescribed address range in said internal circuitry, performs a first authorization based on the command data and on reply data to the command data received from said external device (3), performs a second authorization based on a user code received from said external device (3) following said reply data, and enables use of said debugging unit (2-2) based on said first authorization and said second authorization.

2. The electronic apparatus (4) according to claim 1, wherein, in said first authorization, said authorization unit (2) encrypts said command data and compares the encrypted command data and said reply data.

3. The electronic apparatus (4) according to claim 1 or 2, wherein, in said second authorization, said authorization unit (2) judges whether or not said user code was received at prescribed timing after receiving said reply data.

4. The electronic apparatus (4) according to any of claims 1-3, wherein, in said second authorization, said authorization unit (2) compares a data portion in said reply data and a data portion in said user code.

5. The electronic apparatus (4) according to any of claims 1-4, wherein said internal circuitry stores in memory a user code registered beforehand, and, in said second authorization, said authorization unit (2) compares a user code registered beforehand in said internal circuitry, and said received user code.

6. The electronic apparatus (4) according to claim 5, wherein the user code registered in said internal circuitry is rewritable.

7. The electronic apparatus (4) according to any of claims 1-6, wherein said debug request comprises a designated address range for said internal circuitry; said user code has information relating to an address range for said internal circuitry that can be debugged; and, in said second authorization, said authorization unit (2) judges whether or not said designated address range at the time of said debug request is contained within said address range that can be debugged which corresponds to said received user code.

8. The electronic apparatus (4) according to any of claims 1-7. wherein said user code is encrypted and sent by said external device (3), and said authorization unit (2) decrypts the encrypted user code.

9. A debug authorization method for electronic apparatuses (4) containing internal circuitry (2), **characterised in that** the method comprises the steps of:
- sending command data (S 104) to an external device (3) connected to said electronic apparatus (4) based on a debug request containing designation of a prescribed address range in said internal circuitry;
- performing a first authorization (S 110) based on said command data and on reply data to the command data which are received from said external device (3);
- performing a second authorization (S 114) based on a user code received from said external device (3) following said reply data; and
- judging (S 118, S 120, S 122) whether or not to enable debugging, based on said first authorization and said second authorization.

10. The debug authorization method according to claim 9, wherein said first authorization step includes encrypting (S 106) said command data, and comparing the encrypted command data with said reply data.

11. The debug authorization method according to claim 9 or 10, wherein said second authorization step indudes judging (S 114) whether said user code was received at prescribed timing after reception of said reply data.

12. The debug authorization method according to any of claims 9-11, wherein said second authorization step includes comparing (S 118) a data portion in said reply data and a data portion in said user code.

13. The debug authorization method according to any of claims 9-12, wherein said internal circuitry stores in memory a user code registered beforehand, and said second authorization step includes comparing the user code registered beforehand in said internal circuitry, and said received user code.

14. The debug authorization method according to any of claims 9-13, wherein said debug request (S 100) comprises a designated address range for said internal circuitry; said user code has information relating to an address range for said internal circuitry that can be debugged; and said second authorization step includes judging (S 122) whether or not said designated address range at the time of said debug request is contained within said address range that can be debugged which corresponds to said received user code.

15. An external device (3) connected to an electronic apparatus (4), said electronic apparatus (4) comprising:
- internal circuitry comprising at least an LSI (2),
- a debugging unit (2-2) for debugging said internal circuitry, and
- an authorization unit (2) for enabling use of said debugging unit (2-2) based on communications with an external device (3), **characterised in that**
said authorization unit (2) sends command data to said external device (3) based on a debug request containing designation of a prescribed address range in said internal circuitry, performs a first authorization based on the command data and on reply data to the command data received from said external device (3), performs a second authorization based on a user code received from said external device (3) following said reply data, and enables use of said debugging unit (2-2) based on said first authorization and said second authorization
and **in that** said external device (3) comprises:
- an encryption unit for encrypting command data received from said electronic apparatus (4): and
- a transmitter for sending command data encrypted by said encryption unit as reply data, and also sending user data registered beforehand at prescribed timing after sending said reply data.

16. The external device (3) according to claim 15, wherein said user code is encrypted and sent by said encryption unit.

## Patentansprüche

1. Elektronische Vorrichtung (4) mit:
- einem internen Schaltkreis mit zumindest einer LSI (2);
- einer Debuggingeinheit (2-2) zum Debuggen des internen Schaltkreises; und
- einer Autorisierungseinheit (2), um die Verwendung der Debuggingeinheit (2-2) auf Grundlage der Kommunikation mit einer externen Einrichtung (3) zu ermöglichen,
**dadurch gekennzeichnet,**
**daß** die Autorisierungseinheit (2) Befehlsdaten an die externe Einrichtung (3) auf Grundlage einer Debuggingeinheit sendet, die die Bestimmung eines vorgeschriebenen Adreßbereichs in dem internen Schaltkreis enthält, eine erste Autorisierung auf Grundlage der Befehlsdaten und Antwortdaten auf die Befehlsdaten, die von der externen Einrichtung (3) empfangen werden, durchführt, eine zweite Autorisierung auf Grundlage eines Nutzercodes, der von der externen Einrichtung (3) nach den Antwortdaten empfangen wird, durchführt und die Verwendung der Debuggingeinheit (2-2) auf Grundlage der ersten Autorisierung und der zweiten Autorisierung ermöglicht.

2. Elektronische Vorrichtung (4) nach Anspruch 1, wobei bei der ersten Autorisierung die Autorisierungseinheit (2) die Befehlsdaten verschlüsselt und die verschlüsselten Befehlsdaten mit den Antwortdaten vergleicht.

3. Elektronische Vorrichtung (4) nach Anspruch 1 oder 2, wobei bei der zweiten Autorisierung die Autorisierungseinheit (2) beurteilt, ob der Nutzercode zu einem vorgeschriebenen Zeitablauf nach Empfang der Antwortdaten empfangen wurde.

4. Elektronische Vorrichtung (4) nach einem der Ansprüche 1-3, wobei bei der zweiten Autorisierung die Autorisierungseinheit (2) einen Datenteil in den Antwortdaten und einen Datenteil in dem Nutzercode vergleicht.

5. Elektronische Vorrichtung (4) nach einem der Ansprüche 1-4, wobei der interne Schaltkreis im Speicher einen Nutzercode speichert, der zuvor registriert wurde, und bei der zweiten Autorisierung die Autorisierungseinheit (2) einen Nutzercode, der zuvor in dem internen Schaltkreis registriert wurde, und den empfangenen Nutzercode vergleicht.

6. Elektronische Vorrichtung (4) nach Anspruch 5, wobei der Nutzercode, der in dem internen Schaltkreis registriert wurde, überschreibbar ist.

7. Elektronische Vorrichtung (4) nach einem der Ansprüche 1-6, wobei die Debuggingaufforderung einen bestimmten Adreßbereich für den internen Schaltkreis umfaßt; der Nutzercode Information bezüglich eines Adreßbereichs für den internen Schaltkreis hat, der debuggt werden kann; und bei der zweiten Autorisierung die Autorisierungseinheit (2) beurteilt, ob der bestimmte Adreßbereich zum Zeitpunkt der Debuggingaufforderung innerhalb des Adreßbereichs enthalten ist, der debuggt werden kann, was dem empfangenen Nutzercode entspricht.

8. Elektronische Vorrichtung (4) nach einem der Ansprüche 1-7, wobei der Nutzercode verschlüsselt ist und durch die externe Einrichtung (3) gesendet wird, und die Autorisierungseinheit (2) den verschlüsselten Nutzercode entschlüsselt.

9. Verfahren zur Debuggingautorisierung für elektronische Vorrichtungen (4), die einen internen Schaltkreis (2) enthalten, **dadurch gekennzeichnet, daß** das Verfahren die Schritte umfaßt:
- Senden von Befehlsdaten (S104) an die externe Einrichtung (3), die mit der elektronischen Vorrichtung (4) verbunden ist, auf Grundlage einer Debuggingaufforderung, die die Bestimmung eines vorgeschriebenen Adreßbereichs in dem internen Schaltkreis enthält;
- Durchführen einer ersten Autorisierung (S110) auf Grundlage der Befehlsdaten und Antwortdaten auf die Befehlsdaten, die von der externen Einrichtung (3) empfangen werden;
- Durchführen einer zweiten Autorisierung (S114) auf Grundlage eines Nutzercodes, der von der externen Einrichtung (3) nach den Antwortdaten empfangen wird; und
- Beurteilen (S118, S120, S122), ob das Debuggen auf Grundlage der ersten Autorisierung und der zweiten Autorisierung ermöglicht werden soll oder nicht.

10. Verfahren zur Debuggingautorisierung nach Anspruch 9, wobei der erste Autorisierungsschritt das Verschlüsseln (S106) der Befehlsdaten und das Vergleichen der verschlüsselten Befehlsdaten mit den Antwortdaten einschließt.

11. Verfahren zu Debuggingautorisierung nach Anspruch 9 oder 10, wobei der zweite Autorisierungsschritt das Beurteilen (S114) einschließt, ob der Nutzercode zum vorgeschriebenen Zeitablauf nach dem Empfang der Antwortdaten empfangen wurde.

12. Verfahren zur Debuggingautorisierung nach einem der Ansprüche 9-11, wobei der zweite Autorisierungsschritt das Vergleichen (S118) eines Datenteils in den Antwortdaten und eines Datenteils in dem Nutzercode einschließt.

13. Verfahren zur Debuggingautorisierung nach einem der Ansprüche 9-12, wobei der interne Schaltkreis im Speicher einen Nutzercode, der zuvor registriert wurde, speichert, und der zweite Autorisierungsschritt das Vergleichen des Nutzercodes, der zuvor in dem internen Schaltkreis registriert wurde, und des empfangenen Nutzercodes einschließt.

14. Verfahren zur Debuggingautorisierung nach einem der Ansprüche 9-13, wobei die Debuggingautorisierung (S100) einen bestimmten Adreßbereich des internen Schaltkreises umfaßt; der Nutzercode Information hat, die sich auf einen Adreßbereich für den internen Schaltkreis bezieht, der debuggt werden kann; und der zweite Autorisierungsschritt das Beurteilen (S122) einschließt, ob der bestimmte Adreßbereich zum Zeitpunkt der Debuggingaufforderung im Adreßbereich enthalten ist, der debuggt werden kann, was dem empfangenen Nutzercode entspricht.

15. Externe Einrichtung (3), die mit einer elektronischen Vorrichtung (4) verbunden ist, wobei die elektronische Vorrichtung (4) umfaßt:
- einen internen Schaltkreis mit zumindest einer LSI (2),
- einer Debuggingeinheit (2-2) zum Debuggen des internen Schaltkreises, und
- eine Autorisierungseinheit (2), um die Verwendung der Debuggingeinheit (2-2) auf Grundlage der Kommunikation mit einer externen Einrichtung (3) zu ermöglichen,
**dadurch gekennzeichnet,**
**daß** die Autorisierungseinheit (2) Befehlsdaten an die externe Einrichtung (3) auf Grundlage einer Debuggingaufforderung sendet, die die Bestimmung eines vorgeschriebenen Adreßbereichs in den internen Schaltkreis enthält, eine erste Autorisierung auf Grundlage der Befehlsdaten und der Antwortdaten auf die Befehlsdaten durchführt, die von der externen Einrichtung (3) empfangen werden, eine zweite Autorisierung auf Grundlage eines Nutzercodes durchführt, der von der externen Einrichtung (3) nach den Antwortdaten empfangen wird, und die Verwendung der Debuggingeinheit (2-2) auf Grundlage der ersten Autorisierung und der zweiten Autorisierung ermöglicht;
und **daß** die externe Einrichtung (3) umfaßt:
- eine Verschlüsselungseinheit zum Verschlüsseln der Befehlsdaten, die von der elektronischen Einrichtung (4) empfangen werden; und
- einen Sender zum Senden von Befehlsdaten, die durch diese Verschlüsselungseinheit als Antwortdaten verschlüsselt werden, und auch zum Senden von Nutzerdaten, die zuvor zu einem vorgeschriebenen Zeitablauf nach dem Senden der Antwortdaten registriert wurden.

16. Externe Einrichtung (3) nach Anspruch 15, wobei der Nutzercode verschlüsselt ist und von der Verschlüsselungseinheit gesendet wird.

## Revendications

1. Dispositif électronique (4) comprenant :
- des circuits internes comprenant au moins un LSI (2) ;
- une unité de mise au point (2-2) pour mettre au point lesdits circuits internes ; et
- une unité d'autorisation (2) pour permettre l'utilisation de ladite unité de mise au point (2-2) en fonction de communications avec un dispositif externe (3),
**caractérisé en ce que**
ladite unité d'autorisation (2) envoie des données de commande audit dispositif externe (3) en fonction d'une demande de mise au point contenant une désignation d'une plage d'adresses prescrite dans lesdits circuits internes, exécute une première autorisation en fonction des données de commande et de données de réponse aux données de commande reçues dudit dispositif externe (3), exécute une deuxième autorisation en fonction d'un code d'utilisateur reçu dudit dispositif externe (3) à la suite desdites données de réponse et permet l'utilisation de ladite unité de mise au point (2-2) en fonction de ladite première autorisation et de ladite deuxième autorisation.

2. Dispositif électronique (4) selon la revendication 1, dans lequel, dans ladite première autorisation, ladite unité d'autorisation (2) chiffre lesdites données de commande et compare les données de commande chiffrées et lesdites données de réponse.

3. Dispositif électronique (4) selon la revendication 1 ou 2, dans lequel, dans ladite deuxième autorisation, ladite unité d'autorisation (2) juge si ledit code d'utilisateur a été reçu ou non à un instant prescrit après la réception desdites données de réponse.

4. Dispositif électronique (4) selon l'une quelconque des revendications 1-3, dans lequel, dans ladite deuxième autorisation, ladite unité d'autorisation (2) compare une partie de données desdites données de réponse et une partie de données dudit code d'utilisateur.

5. Dispositif électronique (4) selon l'une quelconque des revendications 1-4, dans lequel lesdits circuits internes enregistrent en mémoire un code d'utilisateur enregistré à l'avance et, dans ladite deuxième autorisation, ladite unité d'autorisation (2) compare un code d'utilisateur enregistré à l'avance dans lesdits circuits internes et ledit code d'utilisateur reçu.

6. Dispositif électronique (4) selon la revendication 5, dans lequel le code d'utilisateur enregistré dans lesdits circuits internes peut être réécrit.

7. Dispositif électronique (4) selon l'une quelconque des revendications 1-6, dans lequel ladite demande de mise au point comprend une plage d'adresses désignée pour lesdits circuits internes ; ledit code d'utilisateur possède une information concernant une plage d'adresses pour lesdits circuits internes qui peuvent être mis au point ; et, dans ladite deuxième autorisation, ladite unité d'autorisation (2) juge si ladite plage d'adresses désignée à l'instant de ladite demande de mise au point est contenue ou non dans ladite plage d'adresses qui peut être mise au point qui correspond audit code d'utilisateur reçu.

8. Dispositif électronique (4) selon l'une quelconque des revendications 1-7, dans lequel ledit code d'utilisateur est chiffré et envoyé par ledit dispositif externe (3) et ladite unité d'autorisation (2) déchiffre le code d'utilisateur chiffré.

9. Procédé d'autorisation de mise au point pour des dispositifs électroniques (4) contenant des circuits internes (2), **caractérisé en ce que** le procédé comprend les opérations consistant à :
- envoyer des données de commande (S 104) à un dispositif externe (3) relié audit dispositif électronique (4) en fonction d'une demande de mise au point contenant une désignation d'une plage d'adresses prescrite dans lesdits circuits internes ;
- exécuter une première autorisation (S 110) en fonction desdites données de commande et de données de réponse aux données de commande qui sont reçues dudit dispositif externe (3) ;
- exécuter une deuxième autorisation (S 114) en fonction d'un code d'utilisateur reçu dudit dispositif externe (3) à la suite desdites données de réponse ; et
- juger (S 118, S 120, S 122) s'il faut ou non permettre la mise au point, en fonction de ladite première autorisation et de ladite deuxième autorisation.

10. Procédé d'autorisation de mise au point selon la revendication 9, dans lequel ladite première opération d'autorisation comprend le chiffrage (S 106) desdites données de commande et la comparaison des données de commande chiffrées auxdites données de réponse.

11. Procédé d'autorisation de mise au point selon la revendication 9 ou 10, dans lequel ladite deuxième opération d'autorisation comprend l'opération consistant à juger (S 114) si ledit code d'utilisateur a été reçu à un instant prescrit après la réception desdites données de réponse.

12. Procédé d'autorisation de mise au point selon l'une quelconque des revendications 9-11, dans lequel ladite deuxième opération d'autorisation comprend la comparaison (S 118) d'une partie de données desdites données de réponse et d'une partie de données dudit code d'utilisateur.

13. Procédé d'autorisation de mise au point selon l'une quelconque des revendications 9-12, dans lequel lesdits circuits internes enregistrent en mémoire un code d'utilisateur enregistré à l'avance et ladite deuxième opération d'autorisation comprend la comparaison du code d'utilisateur enregistré à l'avance dans lesdits circuits internes et dudit code d'utilisateur reçu.

14. Procédé d'autorisation de mise au point selon l'une quelconque des revendications 9-13, dans lequel ladite demande de mise au point (S 100) comprend une plage d'adresses désignée pour lesdits circuits internes ; ledit code d'utilisateur possède une information concernant une plage d'adresses pour lesdits circuits internes qui peuvent être mis au point ; et ladite deuxième opération d'autorisation comprend l'opération consistant à juger (S 122) si ladite plage d'adresses désignée à l'instant de ladite demande de mise au point est contenue ou non dans ladite plage d'adresses qui peut être mise au point qui correspond audit code d'utilisateur reçu.

15. Dispositif externe (3) relié à un dispositif électronique (4), ledit dispositif électronique (4) comprenant :
- des circuits internes comprenant au moins un LSI (2),
- une unité de mise au point (2-2) pour mettre au point lesdits circuits internes et
- une unité d'autorisation (2) pour permettre l'utilisation de ladite unité de mise au point (2-2) en fonction de communications avec un dispositif externe (3),
**caractérisé en ce que**
ladite unité d'autorisation (2) envoie des données de commande audit dispositif externe (3) en fonction d'une demande de mise au point contenant la désignation d'une plage d'adresses prescrite dans lesdits circuits internes, exécute une première autorisation en fonction des données de commande et de données de réponse aux données de commande reçues dudit dispositif externe (3), exécute une deuxième autorisation en fonction d'un code d'utilisateur reçu dudit dispositif externe (3) à la suite desdites données de réponse et permet l'utilisation de ladite unité de mise au point (2-2) en fonction de ladite première autorisation et de ladite deuxième autorisation
et **en ce que** ledit dispositif externe (3) comprend :
- une unité de chiffrement pour chiffrer des données de commande reçues dudit dispositif électronique (4) ; et
- un émetteur pour envoyer des données de commande chiffrées par ladite unité de chiffrement comme données de réponse et envoyer également des données d'utilisateur enregistrées à l'avance à un instant prescrit après l'envoi desdites données de réponse.

16. Dispositif externe (3) selon la revendication 15, dans lequel ledit code d'utilisateur est chiffré et envoyé par ladite unité de chiffrement.
